# FASCICULE DE BREVET EUROPEEN

(11) **EP 4 303 165 B1**
(45) Date de publication et mention de la délivrance du brevet: **28.08.2024**
(21) Numéro de dépôt: 23178891.0
(22) Date de dépôt: 13.06.2023
(51) Int. Cl.: B66C 1/34, B66C 1/36

(54) **SYSTEME D'ACCROCHAGE A DOUBLE VERROUILLAGE DESTINE AU TRANSPORT D'UNE CHARGE EXTERNE A UN AERONEF**
DOPPELVERRIEGELUNGSHAKENSYSTEM ZUM TRANSPORT EINER EXTERNEN LAST AN EIN FLUGZEUG
DOUBLE LOCKING ATTACHMENT SYSTEM FOR THE TRANSPORT OF AN EXTERNAL LOAD TO AN AIRCRAFT

(30) Priorité: 08.07.2022 FR 2207013
(43) Date de publication de la demande: 10.01.2024
(73) Titulaire: Airbus Helicopters, 13725 Marignane Cedex (FR)
(72) Inventeur: LEFORT, Maxime, 13300 SALON DE PROVENCE (FR); SZYMANSKI, Eric, 13220 CHATEAUNEUF LES MARTIGUES (FR)
(74) Mandataire: GPI Brevets

(56) Documents cités:
- GB-A- 2 513 646
- US-A- 4 201 410
- US-A- 4 678 219

## Description

La présente invention se situe dans le domaine des systèmes d'accrochage pour une charge externe à un aéronef.

La présente invention concerne un système d'accrochage à double verrouillage destiné au transport d'une charge externe à un aéronef.

Un aéronef, et plus particulièrement un giravion de type hélicoptère, peut être équipé de manière optionnelle d'une installation pour transporter des charges externes. Dans ce but, l'aéronef comporte généralement une structure porteuse à laquelle est fixé un système d'accrochage, tournant ou non tournant.

Une élingue peut alors être accrochée à ce système d'accrochage afin de permettre la fixation, le levage et le transport de charges externes lourdes. Le système d'accrochage peut aussi autoriser le largage de la charge externe en vol, afin de libérer cette charge externe en un lieu déterminé ou en cas d'urgence, lorsqu'une situation de détresse se présente par exemple.

Le système d'accrochage peut aussi permettre le transport de personnes, par exemple le long d'une corde accrochée au système d'accrochage ou dans une cabine suspendue à ce système d'accrochage, via un câble ou une élingue.

Le système d'accrochage doit donc permettre d'installer et de retirer facilement une corde ou une élingue par exemple, et éventuellement de la larguer depuis le cockpit de l'aéronef, par le pilote de l'aéronef notamment, ou la cabine de l'aéronef, par un opérateur. Le système d'accrochage doit donc dans ce cas respecter des contraintes issues des opérations, de la certification et de critères de sécurité.

Le système d'accrochage doit aussi répondre à des normes de sécurité pour le transport de personnes à l'extérieur de l'aéronef.

Notamment, la probabilité d'occurrence d'un événement considéré comme catastrophique, en particulier l'ouverture accidentelle du système d'accrochage ne doit pas présenter une probabilité d'occurrence supérieure à un seuil, par exemple égal à 10⁻⁹.

Un tel système d'accrochage comporte, par exemple, une structure et un crochet. Le crochet est mobile en rotation par rapport à la structure entre deux positions, à savoir entre une position ouverte et une position fermée.

Dans la position ouverte, un espace est créé entre une extrémité du crochet et la structure pour permettre la mise en place d'une boucle ou d'un anneau, situé à une extrémité d'une corde ou d'une élingue. Dans la position fermée, cet espace est réduit, voire nul, de sorte que la boucle ou l'anneau ne puisse pas s'échapper du système d'accrochage.

La charge transportée par la corde ou l'élingue est ainsi supportée par le crochet.

Le système d'accrochage comporte un dispositif de blocage ou de verrouillage pour maintenir le crochet en position fermée afin d'éviter une rotation soudaine du crochet provoquant une ouverture intempestive de crochet, par exemple sous l'effet du poids de la charge transportée ou suite à des turbulences ou des chocs. Ce dispositif de blocage ou de verrouillage peut aussi être piloté pour permettre le passage du crochet de la position fermée à la position ouverte. Le dispositif de blocage ou de verrouillage peut être actionné manuellement ou bien par un ressort, un moteur électrique, voire un actionneur pneumatique ou hydraulique pour permettre le passage du crochet de la position fermée à la position ouverte. Le dispositif de blocage ou de verrouillage peut être actionné par un opérateur situé à proximité du système d'accrochage ou bien à distance, par exemple par le pilote de l'aéronef, depuis le cockpit de l'aéronef.

Les documents suivants présentent des exemples de systèmes d'accrochage comportant une structure, un crochet et un dispositif de blocage.

Le document US 2005/0258658 présente un système d'accrochage dont le dispositif de blocage est muni d'une goupille de sécurité. La goupille de sécurité peut être insérée dans un emplacement prédéterminé afin de lier le dispositif de blocage à la structure après qu'une charge ait été fixée au système d'accrochage, interdisant alors tout mouvement du crochet, et par suite, son ouverture.

Les documents US 3845978 et US 8016333 présentent des systèmes d'accrochage dont le dispositif de blocage comporte deux éléments de blocage agencés en série afin de permettre l'ouverture du crochet.

Le premier élément de blocage est un verrou mobile en rotation entre une position de blocage pour retenir le crochet dans sa position fermée et une position de libération pour permettre au crochet de pivoter dans sa position ouverte. Le deuxième élément de blocage est un composant rotatif pouvant bloquer le premier élément de blocage dans sa position de blocage et autoriser une rotation du premier élément de blocage vers sa position de libération. Le premier élément de blocage et le deuxième élément de blocage constituent ainsi une unique chaîne d'efforts conduisant au blocage du crochet en position fermée ou à l'ouverture du crochet. Une défaillance sur un élément de cette chaîne peut contribuer à une ouverture intempestive ou accidentelle du crochet.

Selon le document US 8016333, les mouvements du deuxième élément de blocage peuvent être commandés électriquement à l'aide d'un moteur électrique.

Selon le document US 3845978, les mouvements du deuxième élément de blocage peuvent être commandés électriquement à l'aide d'un moteur électrique ou manuellement via une poignée ou un câble.

De plus, selon le document US 3845978, le système d'accrochage comporte une tringle et une bielle permettant, lorsque la charge transportée est posée au sol et que le poids de cette charge n'agit plus sur le crochet, de piloter le moteur afin de déplacer le deuxième élément de blocage conduisant à une ouverture du crochet.

Le document GB 2513646 décrit un crochet de chargement comprenant une structure, un crochet mobile en rotation et un mécanisme de verrouillage permettant de libérer le crochet pour qu'il se déplace d'une position fermée vers une position ouverte. Le mécanisme de verrouillage comporte un verrou et un verrou de verrouillage. Le verrou comporte deux bras, le crochet étant verrouillé au niveau d'un de ces bras dans la position fermée.

Le verrou de verrouillage comporte deux bras et coopère avec le verrou à l'aide d'un premier bras afin d'une part, dans une position verrouillée, de bloquer le mouvement du verrou, et d'autre part, dans une position déverrouillée, de libérer le mouvement du verrou afin de lui permettre de libérer le crochet. Le deuxième bras du verrou de verrouillage comporte un galet qui vient en appui contre une butée du crochet afin de la bloquer à la position fermée.

Ce mécanisme de verrouillage permet ainsi d'avoir deux points de verrouillage agissant de façon distincte sur le crochet, par l'intermédiaire du verrou et du verrou de verrouillage. Toutefois, ces deux points de verrouillage ne sont pas indépendants, la rotation du verrou de verrouillage entraînant simultanément le déplacement du galet du verrou de verrouillage et le déblocage du verrou. De fait, les deux points de verrouillage sont donc dépendants l'un de l'autre, la libération d'un premier point de verrouillage entraînant la libération du second point de verrouillage.

Enfin, l'arrière-plan technologique de l'invention comporte les documents US 4201410 et US 4678219.

La présente invention a alors pour objet de proposer une solution alternative pour un système d'accrochage d'une charge externe pour aéronef permettant de s'affranchir des limitations mentionnées ci-dessus et visant à sécuriser la fermeture du crochet de ce système d'accrochage.

La présente invention concerne un système d'accrochage à double verrouillage. Ce système d'accrochage à double verrouillage est en particulier destiné à être installé sur un aéronef, en étant par exemple fixé à la cellule de cet aéronef, et à permettre le transport d'une charge externe à l'aéronef, par exemple à l'aide d'une élingue ou d'une corde fixée au système d'accrochage à double verrouillage.

Selon l'invention, un système d'accrochage à double verrouillage comporte une structure, un crochet, mobile par rapport à la structure entre une position fermée et une position ouverte, et un système de blocage du crochet en position fermée.

Le crochet peut, par exemple, être mobile en rotation par rapport à la structure autour d'un axe de rotation, entre la position fermée et la position ouverte. En position ouverte, une élingue ou une corde peut être placée sur le crochet afin d'être supportée par le système d'accrochage selon l'invention ou bien être retirée du crochet. En position fermée, l'élingue ou la corde est bloquée sur le crochet et ne peut pas être retirée du système d'accrochage selon l'invention.

Ce système d'accrochage à double verrouillage est remarquable en ce que le système de blocage comporte au moins deux dispositifs de blocage, chaque dispositif de blocage comportant au moins une butée mobile, les butées étant en contact avec le crochet lorsque le crochet est en position fermée, chaque dispositif de blocage immobilisant le crochet en position fermée à l'aide de sa au moins une butée indépendamment de l'autre dispositif de blocage et chaque dispositif de blocage comporte un actionneur commandant le déplacement de sa au moins une butée.

De la sorte, le système d'accrochage selon l'invention permet au minimum un double verrouillage du crochet grâce aux au moins deux dispositifs de blocage munis chacun d'une ou de plusieurs butées, permettant ainsi de sécuriser le verrouillage du crochet.

En effet, ces au moins deux dispositifs de blocage du système de blocage permettent de maintenir indépendamment le crochet du système d'accrochage dans la position fermée, à l'aide de chacune des butées.

Ainsi, en cas de défaillance d'un de ces au moins deux dispositifs de blocage, suite par exemple à une rupture d'un des composants de ce dispositif de blocage, tel qu'une butée, le crochet est toujours maintenu en position fermée grâce à l'autre dispositif de blocage.

Le transport d'une charge ou de personnes avec ce système d'accrochage, et à l'aide d'une élingue et d'une corde par exemple, est en conséquence avantageusement sécurisé.

En outre, pour positionner le crochet en position ouverte et libérer ainsi l'élingue ou la corde le cas échéant, les au moins deux dispositifs de blocage doivent être activés afin que toutes les butées soient déplacées pour permettre l'ouverture du crochet. Les au moins deux dispositifs de blocage peuvent être activés simultanément ou de façon séquentielle.

Par exemple, le système de blocage du système d'accrochage selon l'invention comporte deux dispositifs de blocage.

Le système d'accrochage selon l'invention peut comporter une ou plusieurs des caractéristiques qui suivent, prises seules ou en combinaison.

Selon une possibilité, les butées peuvent être en contact avec le crochet de façon distincte pour chaque dispositif de blocage lorsque le crochet est en position fermée. Par exemple, les butées des dispositifs de blocage sont en contact avec le crochet sur des zones distinctes du crochet, telles qu'une extrémité du crochet et une protubérance que comporte le crochet par exemple.

Selon l'invention, chaque dispositif de blocage comporte un actionneur commandant le déplacement de sa au moins une butée. L'actionneur peut dans ce but être relié directement à la ou aux butées correspondantes ou par l'intermédiaire d'un dispositif de transfert ou de réduction de mouvement. Un mouvement de la butée provoqué par l'actionneur permet ainsi de libérer le crochet de cette butée. De plus, chaque dispositif de blocage comporte ainsi son propre actionneur qui est indépendant de l'actionneur de l'autre dispositif de blocage contribuant ainsi à la sécurisation du système d'accrochage. Après l'activation des dispositifs de blocage et la libération du crochet de toutes les butées, un mouvement du crochet de la position fermée vers la position ouverte est réalisé, par exemple sous son propre poids.

Un actionneur peut comporter un moteur électrique entraînant par exemple en rotation la butée ou bien une biellette provoquant le déplacement de la butée. Alternativement, un actionneur peut comporter un vérin, qui peut être électrique, pneumatique ou hydraulique par exemple, provoquant un mouvement de la butée ou bien d'une biellette portant une butée.

Selon une autre possibilité compatible avec les précédentes, au moins un dispositif de blocage peut comporter au moins une biellette, mobile en rotation et munie d'une butée, l'actionneur commandant le déplacement de cette biellette. De la sorte, une biellette particulière parmi ladite au moins une biellette peut comporter une butée de ce dispositif de blocage. Cette biellette particulière est mobile en rotation par rapport à la structure du système d'accrochage. L'actionneur peut alors être relié directement à cette biellette particulière, ou par l'intermédiaire d'un dispositif de transfert ou de réduction de mouvement. L'actionneur peut aussi être relié à une biellette de transfert reliée à cette biellette particulière. Un mouvement en rotation de la biellette particulière provoqué par l'actionneur permet ainsi de déplacer la butée afin notamment de libérer le crochet de la butée de ce dispositif de blocage.

Par exemple, un des dispositifs de blocage peut comporter une butée et une seule biellette désignée par exemple « biellette de blocage ». La biellette de blocage est mobile en rotation et comporte la butée. L'actionneur peut agir sur la biellette de blocage afin de déplacer la butée et libérer ainsi le crochet de cette butée.

Selon un autre exemple, un des dispositifs de blocage peut comporter une butée et deux biellettes mobiles en rotation, les deux biellettes comportant une biellette de basculement et une biellette de verrouillage. La biellette de basculement comporte par exemple un premier bras et un deuxième bras alors que la biellette de verrouillage comporte un troisième bras. Le premier bras peut comporter la butée, le troisième bras étant en appui contre le deuxième bras afin d'interdire un déplacement de la biellette de basculement lorsque le crochet est en position fermée, la butée portée par le premier bras étant en contact avec le crochet. L'actionneur peut agir sur le troisième bras afin de libérer le deuxième bras de la biellette de basculement et de permettre ainsi la mise en mouvement de la biellette de basculement et de la butée pour libérer le crochet de cette butée. L'actionneur peut alors agir directement sur la biellette de verrouillage afin de libérer le deuxième bras et de permettre la mise en mouvement de la biellette de basculement pour libérer le crochet des deux butées.

Ces deux exemples peuvent être combinés. De plus, dans ce cas, la biellette de blocage et la biellette de verrouillage peuvent être coaxiales et ainsi mobiles autour d'un même axe de pivotement de façon indépendante, en étant déplacées par deux actionneurs distincts et indépendants.

Selon un autre exemple compatible avec les précédents, un des dispositifs de blocage peut comporter deux butées et deux biellettes, les deux biellettes comportant une biellette de basculement et une biellette de verrouillage. La biellette de basculement comporte par exemple un quatrième bras et un cinquième bras et la biellette de verrouillage comporte un sixième bras et un septième bras. Le quatrième bras peut comporter l'une des deux butées, le sixième bras étant alors en appui contre le cinquième bras afin d'interdire un déplacement de la biellette de basculement, le septième bras comportant l'autre des deux butées. L'actionneur peut alors agir directement sur la biellette de verrouillage afin de libérer le cinquième bras et de permettre la mise en mouvement de la biellette de basculement pour libérer le crochet des deux butées.

Selon une autre possibilité compatible avec les précédentes, le crochet peut comporter une poutre inférieure, une partie latérale, une partie supérieure et un espace ouvert agencé entre la poutre inférieure et la partie supérieure, le crochet étant mobile en rotation par rapport à la structure dans la partie latérale ou la partie supérieure. La partie latérale ou la partie supérieure sont par exemple articulées en rotation par rapport à la structure à l'aide d'une liaison de type à pivot.

L'espace ouvert du crochet permet ainsi en position ouverte du crochet de positionner l'élingue ou la corde sur la poutre inférieure de ce crochet ou bien de désengager l'élingue ou la corde de la poutre inférieure de ce crochet et donc du système d'accrochage selon l'invention.

Dans la position fermée, cet espace ouvert du crochet est obturé au moins partiellement, voire en totalité par la structure du système d'accrochage de sorte que l'élingue ou la corde soit maintenue sur la poutre inférieure du crochet et ne puisse ainsi pas s'échapper du système d'accrochage selon l'invention.

Les butées d'un des dispositifs de blocage peuvent être en appui contre une première partie choisie parmi les parties latérale et supérieure et la poutre inférieure en position fermée du crochet et l'autre dispositif de blocage peut comporter une seule butée en appui contre une seconde partie choisie parmi les parties latérale et supérieure et la poutre inférieure en position fermée du crochet. La première partie et la seconde partie peuvent être distinctes l'une de l'autre.

De plus, les butées peuvent maintenir le crochet en position fermée en étant en appui contre des parties distinctes choisies parmi les parties latérale et supérieure et la poutre inférieure du crochet contribuant ainsi à la sécurisation de ce maintien du crochet en position fermée.

Selon une première variante, chaque dispositif de blocage comporte une seule biellette. Un des dispositifs de blocage peut comporter une seule butée en appui contre une première partie choisie parmi les parties latérale et supérieure et la poutre inférieure en position fermée du crochet et l'autre des dispositifs de blocage peut comporter une seule butée en appui contre une seconde partie choisie parmi les parties latérale et supérieure et la poutre inférieure en position fermée du crochet. La première partie et la seconde partie peuvent avantageusement être distinctes l'une de l'autre.

Selon une seconde variante, au moins un dispositif de blocage parmi les deux dispositifs de blocage peut comporter deux butées et deux biellettes mobiles en rotation et munies respectivement des deux butées. L'actionneur de ce dispositif de blocage peut alors agir sur une des deux biellettes, directement ou par l'intermédiaire d'un dispositif de réduction de mouvement.

Par exemple, un des dispositifs de blocage peut comporter une seule butée en appui contre une première partie choisie parmi les parties latérale et supérieure et la poutre inférieure en position fermée du crochet et l'autre des dispositifs de blocage peut comporter deux biellettes, chaque biellette portant une butée, les deux butées étant respectivement en appui contre une seconde partie et une troisième partie choisies parmi les parties latérale et supérieure et la poutre inférieure en position fermée du crochet. La première partie, la seconde partie et la troisième partie peuvent avantageusement être distinctes les unes des autres.

Selon une autre possibilité compatible avec les précédentes, le système d'accrochage selon l'invention peut comporter un dispositif de déblocage d'urgence muni de deux câbles et d'un actionneur d'urgence relié aux deux câbles. Chaque câble est relié à un dispositif de blocage et chaque dispositif de blocage est relié à un câble. Chaque câble permet ainsi de commander le déplacement de la ou des butées du dispositif de blocage auquel il est relié. Ce déplacement de la butée peut être commandé par le câble directement, le câble étant relié à la butée, ou par l'intermédiaire d'une ou de plusieurs biellettes, le câble étant relié à une biellette. Un embout sphérique peut par exemple être serti au bout du câble, et maintenu par une fourchette du dispositif de blocage.

Les deux câbles reliés aux deux dispositifs de blocage sont déplacés par le même actionneur d'urgence. L'actionneur d'urgence peut par exemple comporter une commande manuelle, un moteur électrique, un vérin, voire un dispositif pyrotechnique.

Le dispositif de déblocage d'urgence du système d'accrochage permet ainsi déplacer le crochet de la position fermée à la position ouverte en cours de vol de l'aéronef afin de larguer rapidement la charge transportée et accrochée au système d'accrochage.

En outre, l'invention a pour objet un aéronef comportant un système d'accrochage à double verrouillage tel que précédemment décrit. Le système d'accrochage à double verrouillage peut être fixé ou suspendu à une cellule de l'aéronef, par exemple sous la cellule ou sur le côté de la cellule. Une élingue ou une corde peut être pendue au crochet du système d'accrochage à double verrouillage afin de permettre à l'aéronef de transporter une charge ou des personnes.

L'invention et ses avantages apparaîtront avec plus de détails dans le cadre de la description qui suit avec des exemples donnés à titre illustratif en référence aux figures annexées qui représentent :
- la figure 1, une vue en perspective d'un système d'accrochage selon l'invention en position fermée,
- la figure 2, une vue en coupe d'un système d'accrochage selon l'invention en position fermée,
- la figure 3, une autre vue en coupe d'un système d'accrochage selon l'invention en position fermée,
- la figure 4, une vue en coupe du système d'accrochage de la figure 2 en position ouverte,
- la figure 5, une vue en coupe d'un autre système d'accrochage selon l'invention en position fermée,
- la figure 6, une vue en coupe du système d'accrochage de la figure 5 en position ouverte,
- la figure 7, une vue en coupe d'un système d'accrochage selon l'invention muni d'un actionneur d'urgence, et
- la figure 8, une vue de côté d'un aéronef équipé d'un système d'accrochage selon l'invention.

Les éléments présents dans plusieurs figures distinctes sont affectés d'une seule et même référence.

Les notions de « droite », « gauche », « inférieure » et « supérieure » évoquées dans la description s'entendent de façon relative et pour un observateur regardant les figures.

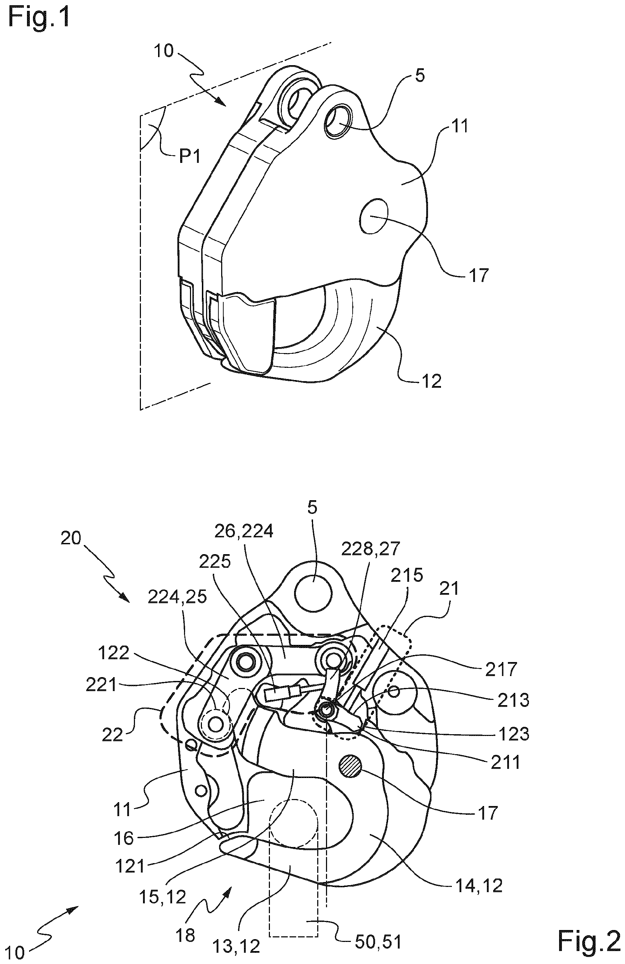

La figure 1 représente un système d'accrochage 10 à double verrouillage comportant une structure 11 et un crochet 12. Le crochet 12 est mobile par rapport à la structure 11 et peut être déplacé, par exemple en rotation autour d'un arbre de rotation 17, entre une position fermée et une position ouverte incluses. Le crochet 12 est représenté en position fermée sur la figure 1. Le système d'accrochage 10 comporte également un système de blocage 20 pour maintenir le crochet 12 en position fermée. Eventuellement, la structure 11 peut comporter un orifice 5 traversant. Cet orifice 5 est destiné à fixer le système d'accrochage 10 par exemple à un véhicule, en particulier à un aéronef.

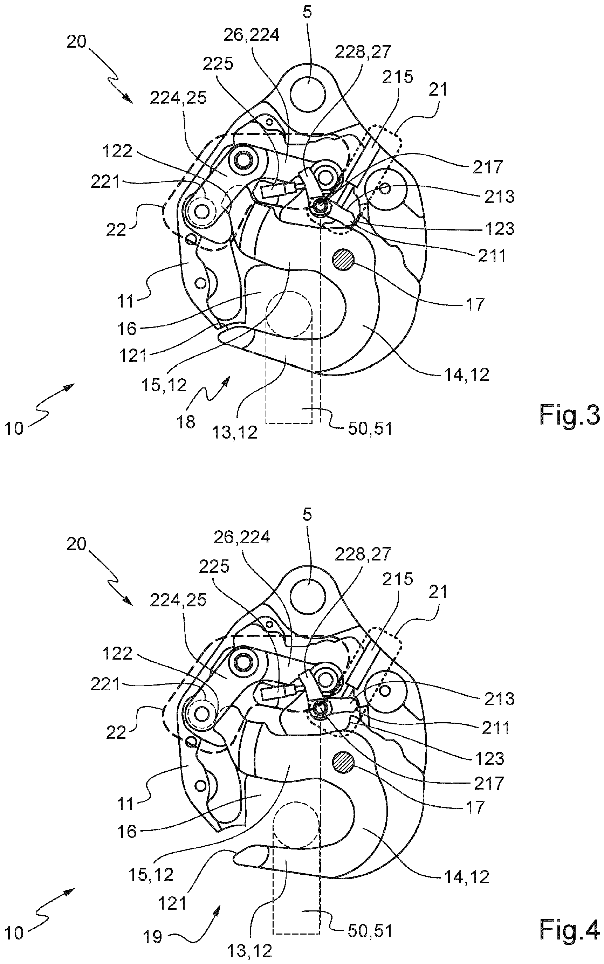

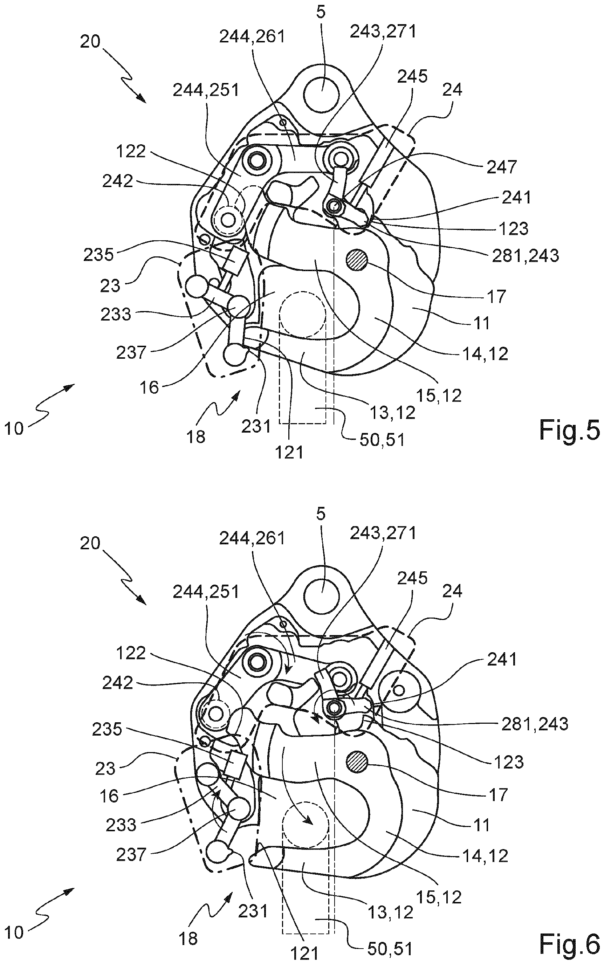

Les figures 2 à 6 représentent des vues en coupe selon le plan P1 de ce système d'accrochage 10 à double verrouillage, le crochet 12 étant en position fermée 18 sur les figures 2, 3 et 5, et en position ouverte 19 sur les figures 4 et 6.

Le crochet 12 peut comporter comme représenté sur les figures une poutre inférieure 13, une partie latérale 14, une partie supérieure 15 et un espace ouvert 16 agencé entre la poutre inférieure 13 et la partie supérieure 15. Le crochet 12 peut par exemple avoir sensiblement une forme en U ou C.

Une élingue 50 est aussi représentée en pointillés sur les figures 2 à 6, cette élingue 50 étant positionnée sur la poutre inférieure 13 du crochet 12. Plus précisément, une boucle 51 formant une extrémité de l'élingue 50 est accrochée à la poutre inférieure 13.

Le crochet 12 est mobile par rapport à la structure 11. Par exemple, le crochet 12 est mobile en rotation par rapport à la structure 11 autour d'un arbre de rotation 17 pour passer de la position fermée 18 à la position ouverte 19, et inversement. Le crochet 12 peut être mobile autour de l'arbre de rotation 17 dans la partie supérieure 15 comme représenté sur les figures. L'arbre de rotation 17 est par exemple solidaire de la structure 11 et traverse la partie latérale 14 du crochet 12. Eventuellement, un palier ou un roulement peut être positionné entre la partie latérale 14 et l'arbre de rotation 17 afin de faciliter la rotation du crochet 12 autour de cet arbre de rotation 17.

Alternativement, le crochet 12 peut être mobile autour de l'arbre de rotation 17 dans la partie supérieure 15.

Dans la position fermée 18, l'espace ouvert 16 est totalement obturé par la structure 11 du système d'accrochage 10. Ainsi, la boucle 51 de l'élingue 50 ne peut pas sortir du crochet 12. La boucle 51 est donc maintenue sur la poutre inférieure 13 du crochet 12 et ne peut pas s'échapper du système d'accrochage 10.

Dans la position ouverte 19, un jeu existe entre une extrémité du crochet 12, à savoir l'extrémité 121 de la poutre inférieure 13, et la structure 11. La boucle 51 de l'élingue 50 peut donc être mise en place dans l'espace ouvert 16 au niveau de ce jeu et positionnée sur la poutre inférieure 13 du crochet 12 pour accrocher l'élingue 50 au système d'accrochage 10 ou, inversement, la boucle 51 peut être retirée de l'espace ouvert 16 au niveau de ce jeu pour enlever l'élingue 50 du système d'accrochage 10.

Le système de blocage 20 est muni d'au moins deux dispositifs de blocage 21,22,23,24. Chaque dispositif de blocage 21,22,23,24 comporte au moins une butée 211,221,231,241,242 mobile et un actionneur 215,225,235,245 pour déplacer ladite au moins une butée 211,221,231, 241,242 par rapport à la structure 11. Sur les exemples représentés, le système de blocage 20 comporte deux dispositifs de blocage 21,22,23,24. Toutefois, un système de blocage 20 peut comporter plus de deux dispositifs de blocage 21,22,23,24 par exemple trois dispositifs de blocage.

Comme représenté sur les figures 2 à 4, le système de blocage 20 peut comporter par exemple un dispositif de blocage droit 21 et un dispositif de blocage gauche 22 munis respectivement d'une seule butée droite 211 et d'une seule butée gauche 221. Les deux butées droite 211 et gauche 221 sont respectivement en appui contre une première partie et une seconde partie choisies parmi la poutre inférieure 13, la partie latérale 14 et la partie supérieure 15. Par exemple, la butée droite 211 du dispositif de blocage droit 21 est en appui contre la partie latérale 16, en particulier une protubérance 123 de la partie latérale 16 alors que la butée gauche 221, du dispositif de blocage gauche 22 est en appui contre la partie supérieure 15 du crochet 12, en particulier son extrémité 122, lorsque le crochet 12 est en position fermée 18. La première partie et la seconde partie sont ainsi avantageusement distinctes l'une de l'autre.

Alternativement, au moins un des dispositifs de blocage 21,22,23,24 peut comporter deux butées 241,242. Selon l'exemple représenté sur les figures 5 et 6, le système de blocage 20 peut comporter un dispositif de blocage inférieur 23 muni d'une seule butée inférieure 231 et un dispositif de blocage supérieur 24 muni d'une butée supérieure droite 241 et d'une butée supérieure gauche 242. La butée inférieure droite 231 du dispositif de blocage inférieur 23 est par exemple en appui contre l'extrémité 121 de la poutre inférieure 13 et les deux butées supérieure droite 241 et gauche 242 du dispositif de blocage gauche 24 sont respectivement en appui contre l'extrémité 122 de la partie supérieure 15 et contre la protubérance 123 de la partie latérale 16 du crochet 12 lorsque le crochet 12 est en position fermée 18.

L'actionneur 215,225,235,245 de chaque dispositif de blocage 21,22,23,24 peut commander directement le déplacement de la ou des butées 211,221,231,241,242 d'un dispositif de blocage 21,22,23,24, sans agir sur le déplacement de la ou des butées 211,221,231,241,242 d'un autre dispositif de blocage 21,22,23,24.

Alternativement, l'actionneur 215,225,235,245 de chaque dispositif de blocage 21,22,23,24 peut commander par l'intermédiaire d'une biellette le déplacement de la ou des butées 211,221,231,241,242 de ce dispositif de blocage 21,22,23,24, sans agir sur le déplacement de la ou des butées 211,221,231,241,242 d'un autre dispositif de blocage 21,22,23,24.

Un dispositif de blocage 21,22,23,24 peut ainsi comporter au moins une biellette 213,224,233,243,244 mobile en rotation par rapport à la structure 11 et munie d'une butée 211,221,231,241,242, l'actionneur 215,225,235,245 commandant le déplacement de la biellette 213,224,233,243,244, et par suite de la butée 211,221,231,241,241 de cette biellette 213,224,233,243,244.

Par exemple, le dispositif de blocage droit 21 représenté sur les figures 2 à 4 peut être muni d'une biellette de blocage 213 portant la butée droite 211 et d'un actionneur droit 215 relié à cette biellette de blocage 213. La biellette de blocage 213 est mobile en rotation autour d'un axe de pivotement 217. Selon cet exemple, le dispositif de blocage gauche 22 peut comporter deux biellettes 224,228, dont une biellette de basculement 224 et une biellette de verrouillage 228, ainsi qu'un actionneur gauche 225. La biellette de basculement 224 comporte un premier bras 25 et un deuxième bras 26 fixes l'un par rapport à l'autre, le premier bras 25 portant la butée 221.

La biellette de verrouillage 228 comporte un troisième bras 27 qui est en appui contre le deuxième bras 26 lorsque le crochet 12 est en position fermée. Le troisième bras 27 interdit ainsi un déplacement de la biellette de basculement 224 et par suite de la butée gauche 221, comme représenté sur la figure 2. Sur cette figure 2, la butée gauche 221 est également en appui contre l'extrémité 122. Le crochet 12 est alors bloqué dans la position fermée 18.

L'actionneur gauche 225 est relié au troisième bras 27 et peut commander le déplacement du troisième bras 27 autour de l'axe de pivotement 217, provoquant le déplacement de la biellette de basculement 224 et, par suite de la butée gauche 221, comme représenté sur la figure 3. La butée gauche 221 n'est alors plus en appui contre l'extrémité 122 et ne bloque alors plus le déplacement du crochet 12. Toutefois, la butée droite 211 est toujours en appui contre la protubérance 123 grâce à l'actionneur droit 215. Le crochet 12 est alors toujours bloqué dans la position fermée 18.

Ensuite, grâce à l'actionneur droit 215, la biellette de blocage 213 et la butée droite 211 peuvent être déplacées, comme représentés sur la figure 4, pour que la butée droite 211 ne soit plus en appui contre la protubérance 123. Le crochet 12 n'est alors toujours plus bloqué dans la position fermée 18, aucune des butées droite 211 et gauche 221 n'empêchant son déplacement vers la position ouverte 19.

Selon l'exemple représenté sur les figures 2 à 4, la biellette de blocage 213 et la biellette de verrouillage 228 peuvent être mobiles l'une par rapport à l'autre autour du même axe de pivotement 217. Alternativement, la biellette de blocage 213 et la biellette de basculement 224 peuvent être mobiles en rotation autour d'axes distincts.

Selon un autre exemple représenté sur les figures 5 et 6, le dispositif de blocage supérieur 24 peut être muni d'un actionneur supérieur 245 et de deux biellettes 243,244 mobiles en rotation autour d'axes distinctes et comportant respectivement la butée supérieure droite 241 et la butée supérieure gauche 242. Le dispositif de blocage supérieur 24 peut ainsi comporter une biellette de verrouillage 243 et une biellette de basculement 244. La biellette de basculement 244 comporte un quatrième bras 251 et un cinquième bras 261 fixes l'un par rapport à l'autre et la biellette de verrouillage 243 comporte un sixième bras 271 et un septième bras 281 fixes l'un par rapport à l'autre. Le quatrième bras 251 comporte la butée supérieure gauche 242 qui est en appui contre l'extrémité 122 de la partie supérieure 15 lorsque le crochet 12 est en position fermée 18. Le sixième bras 271 est en appui contre le cinquième bras 261 afin d'interdire un déplacement de la biellette de basculement 244. Le septième bras 281 comporte la butée supérieure droite 241 qui est en appui contre la protubérance 123 agencée sur de la partie latérale 14 lorsque le crochet 12 est en position fermée 18.

L'actionneur supérieur 245 est relié à la biellette de verrouillage 243 et commande son déplacement afin de permettre simultanément le déplacement de la butée supérieure droite 241 et le déplacement de la biellette de basculement 244, et par suite de la butée supérieure gauche 242. Les deux butées supérieures droite 241 et gauche 242 ne bloquent alors plus le déplacement du crochet 12.

Le dispositif de blocage inférieur 23 comporte quant à lui une biellette inférieure 235 mobile en rotation et portant la butée inférieure 231 ainsi qu'un actionneur inférieur 235. L'actionneur inférieur 235 est relié à la biellette inférieure 235 et commande son déplacement afin de permettre le déplacement de la butée inférieure 231 afin de libérer le crochet 12.

Ainsi, si un seul dispositif de blocage 21,22,23,24 est activé ou subit une défaillance provoquant un déplacement de sa ou ses butées 211,221,231,241,242 ou une rupture d'une butée 211,221,231,241,242 ou d'une biellette 2113,224,233,243,244 le cas échéant, le crochet 12 est avantageusement toujours maintenu en position fermée 18 grâce à l'autre dispositif de blocage 21,22,23,24.

Pour permettre le déplacement du crochet 12 de la position fermée 18 vers la position ouverte 19 et libérer ainsi l'élingue 50, tous les dispositifs de blocage 21,22,23,24 du système d'accrochage 10 doivent être activés afin de déplacer leurs butées 211,221,231,241,242 respectives, débloquant alors le crochet 12. Les dispositifs de blocage 21,22,23,24 peuvent être activés simultanément ou de façon séquentielle. Par exemple, un opérateur peut à l'aide d'une interface homme-machine, tel qu'un interrupteur un bouton ou encore un écran muni d'une dalle tactile, commander l'actionneur 215,225,235,245 de chaque dispositif de blocage 21,22,23,24.

Chaque actionneur 215,225,235,245 peut comporter par exemple un moteur électrique commandant directement ou par l'intermédiaire d'un dispositif de réduction la rotation d'une butée 211,221,231,241,242 ou d'une biellette 213,224,233,243,244 le cas échéant.

Alternativement, chaque actionneur 215,225,235,245 peut comporter un vérin, électrique, pneumatique ou hydraulique, commandant un déplacement d'une butée 211,221,231,241,242 ou d'une biellette 213,224,233,243,244 le cas échéant.

Ainsi, quelle que soit la réalisation du système d'accrochage 10, le crochet 12 peut rester en position fermée 18, y compris suite à une défaillance d'un des dispositifs de blocage 21,22,23,24, telle que par exemple, la rupture d'une butée 211,221,231,241,242, ou encore une rupture de la partie supérieure 15 du crochet 12. Par exemple, suite à une rupture de cette partie supérieure 15, la protubérance 123 de la partie latérale 14 et/ou l'extrémité 121 de la poutre inférieure 13 permettent toujours un appui contre une butée 211,231,241 et, de fait, le blocage du crochet 12 en position fermée 18.

En conséquence, chaque dispositif de blocage 21,22,23,24 permet d'immobiliser seul le crochet 12 en position fermée 18 à l'aide d'au moins une butée 211,221,231,241,242 indépendamment de l'autre dispositif de blocage 21,22,23,24, y compris suite à une défaillance de l'autre dispositif de blocage 21,22,23,24.

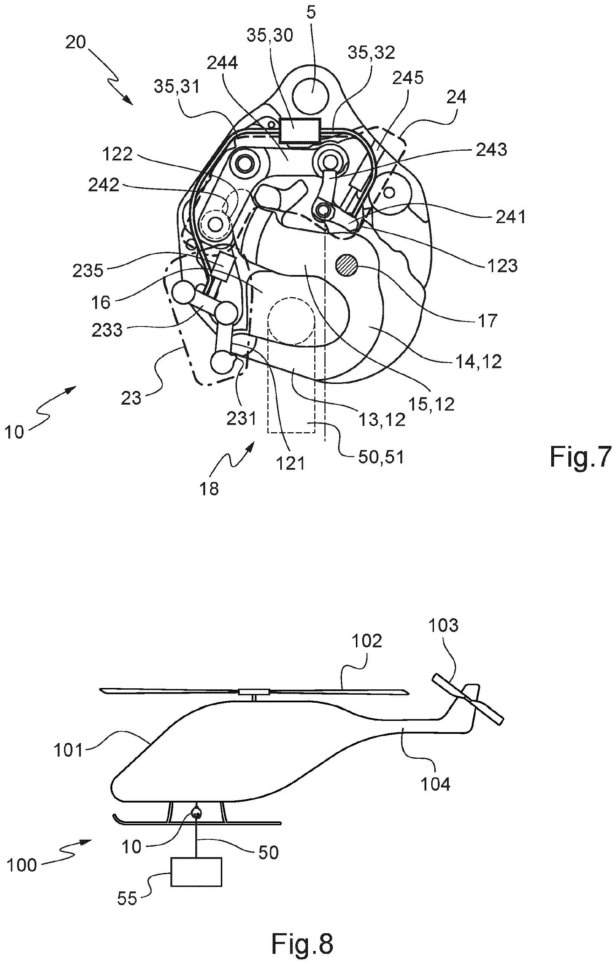

Le système d'accrochage 10 à double verrouillage peut aussi comporter un dispositif de déblocage d'urgence 35 muni de deux câbles 31,32 et d'un actionneur d'urgence 30 comme représenté sur la figure 7. L'actionneur d'urgence 30 est relié aux deux câbles 31,32 afin de provoquer simultanément des déplacements de longueurs identiques des deux câbles 31,32. Chacun des deux câbles 31,32 est relié à un seul dispositif de blocage 21,22,23,24 et chacun des deux dispositifs de blocage 21,22,23,24 est relié à un câble 31,32.

Les câbles 31,32 permettent de commander le déplacement des butées 231,241,242 des deux dispositifs de blocage 23,24, éventuellement par l'intermédiaire d'une biellette 233,243,244.

Ainsi, l'actionneur d'urgence 30 peut commander simultanément l'activation des deux dispositifs de blocage 21,22,23,24 afin de débloquer le crochet 12 et de permettre son déplacement en position ouverte 19 de sorte à libérer l'élingue 50 fixée au système d'accrochage 10, par exemple en cas d'urgence.

L'actionneur d'urgence 30 peut comporter une commande manuelle pour être actionnée par un opérateur, par exemple un membre de l'équipage de l'aéronef équipé du système d'accrochage 10. L'actionneur d'urgence 30 peut aussi comporter un moteur électrique, un vérin, et/ou un dispositif pyrotechnique.

La figure 8 présente un aéronef 100 muni d'une cellule 101, et par exemple d'un rotor de sustentation 102 agencé au-dessus de la cellule 101 et/ou d'un rotor auxiliaire 103 agencé éventuellement à l'extrémité d'une poutre de queue 104 de la cellule 101. L'aéronef 100 comporte également un système d'accrochage 10 fixé sous la cellule 101 par exemple via l'orifice 5 de fixation. Une extrémité d'une élingue 50 est accrochée au crochet 12 du système d'accrochage 10 à double verrouillage, par l'intermédiaire d'une boucle 51 ou d'un anneau solidaire de l'élingue 50. Une charge utile 55 est fixée à l'autre extrémité de cette élingue 50 afin de pouvoir être transportée par l'aéronef 100.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

## Revendications

1. Système d'accrochage (10) à double verrouillage comportant une structure (11), un crochet (12), mobile par rapport à la structure (11) entre une position fermée (18) et une position ouverte (19), et un système de blocage (20) du crochet (12) en position fermée (18),
ledit système de blocage (20) comportant au moins deux dispositifs de blocage (21,22,23,24), chaque dispositif de blocage (21,22,23,24) comportant au moins une butée (211,221,231,241,242) mobile, lesdites butées (211,221,231,241,242) étant en contact avec ledit crochet (12) lorsque ledit crochet (12) est en position fermée (18), chaque dispositif de blocage (21,22,23,24) immobilisant ledit crochet (12) en position fermée (18), à l'aide de sa au moins une butée (211,221,231,241,242), **caractérisé en ce que** chaque dispositif de blocage (21,22,23,24) immobilise ledit crochet en position fermée indépendamment de l'autre dispositif de blocage (21,22,23,24) et chaque dispositif de blocage (21,22,23,24) comporte un actionneur (215,225,235,245) commandant le déplacement de sa au moins une butée (211,221,231,241,242).

2. Système d'accrochage (10) selon la revendication 1,
dans lequel lesdites butées (211,221,231,241,242) sont en contact avec ledit crochet (12) de façon distincte pour chaque dispositif de blocage (21,22,23,24) lorsque ledit crochet (12) est en position fermée (18).

3. Système d'accrochage (10) selon l'une quelconque des revendications 1 à 2,
dans lequel ledit actionneur (215,225,235,245) comporte un moteur électrique et/ou un vérin.

4. Système d'accrochage (10) selon l'une quelconque des revendications 1 à 3,
dans lequel au moins un dispositif de blocage (21,22,23,24) comporte au moins une biellette (213,224,233,243,244) mobile en rotation et munie de ladite butée (211,221,231,241,242) dudit dispositif de blocage (21,22,23,24), ledit actionneur (215,225,235) commandant le déplacement de ladite biellette (213,224,233,243,244).

5. Système d'accrochage (10) selon la revendication 4,
dans lequel un desdits dispositifs de blocage (21,22,23,24) comporte une biellette de blocage (213) mobile en rotation et comportant ladite butée (211), ledit actionneur (215) agissant sur ladite biellette de blocage (213).

6. Système d'accrochage (10) selon l'une quelconque des revendications 4 à 5,
dans lequel un desdits dispositifs de blocage (21,22,23,24) comporte une seule butée (221) et deux biellettes (224,228) mobiles en rotation, lesdites deux biellettes (224,228) comportant une biellette de basculement (224) et une biellette de verrouillage (228), ladite biellette de basculement (224) comportant un premier bras (25) et un deuxième bras (26) et ladite biellette de verrouillage (228) comportant un troisième bras (27), ledit premier bras (25) comportant ladite butée (221), ledit troisième bras (27) étant en appui contre ledit deuxième bras (26) afin d'interdire un déplacement de ladite biellette de basculement (224) lorsque ledit crochet (12) est en position fermée (18), ledit actionneur (225) agissant sur ledit troisième bras (27) afin libérer ledit deuxième bras (26) et de permettre la mise en mouvement de ladite biellette de basculement (224).

7. Système d'accrochage (10) selon les revendications 5 et 6,
dans lequel ladite biellette de blocage (213) et ladite biellette de verrouillage (228) sont mobiles autour d'un même axe de pivotement (217).

8. Système d'accrochage (10) selon l'une quelconque des revendications 4 à 7,
dans lequel un desdits dispositifs de blocage (21,22,23,24) comporte deux butées (241,242) et deux biellettes (243,244) mobiles en rotation et munies respectivement desdites deux butées (241,242), lesdites deux biellettes (243,244) comportant une biellette de basculement (244) et une biellette de verrouillage (243), ladite biellette de basculement (244) comportant un quatrième bras (251) et un cinquième bras (261) et ladite biellette de verrouillage (243) comportant un sixième bras (271) et un septième bras (281), ledit quatrième bras (251) comportant l'une desdites deux butées (241,242), ledit sixième bras (271) étant en appui contre ledit cinquième bras (261) afin d'interdire un déplacement de ladite biellette de basculement (244) lorsque ledit crochet (12) est en position fermée (18), ledit septième bras (281) comportant l'autre desdites deux butées (241,242), ledit actionneur (245) agissant sur ladite biellette de verrouillage (243) afin de libérer ledit cinquième bras (261) et de permettre la mise en mouvement de ladite biellette de basculement (244).

9. Système d'accrochage (10) selon l'une quelconque des revendications 1 à 8,
dans lequel ledit crochet (12) comporte une poutre inférieure (13), une partie latérale (14), une partie supérieure (15) et un espace ouvert (16) agencé entre ladite poutre inférieure (13) et ladite partie supérieure (15), ledit crochet (12) étant mobile en rotation par rapport à ladite structure (11) dans ladite partie latérale (14) ou ladite partie supérieure (15), au moins un des dispositifs de blocage (21,22,23,24) comporte une seule butée (211) en appui contre une première partie choisie parmi lesdites parties latérale (14) et supérieure (15) et ladite poutre inférieure (13) en position fermée (18) dudit crochet (12) et un autre desdits dispositifs de blocage (21,22,23,24) comporte une seule butée (221) en appui contre une seconde partie choisie parmi lesdites parties latérale (14) et supérieure (15) et ladite poutre inférieure (13) en position fermée (18) dudit crochet (12).

10. Système d'accrochage (10) selon l'une quelconque des revendications 1 à 8,
dans lequel au moins un dispositif de blocage (21,22,23,24) parmi lesdits dispositifs de blocage (21,22,23,24) comporte deux butées (211,221,231,241,242).

11. Système d'accrochage (10) selon la revendication 10,
dans lequel ledit crochet (12) comporte une poutre inférieure (13), une partie latérale (14), une partie supérieure (15) et un espace ouvert (16) agencé entre ladite poutre inférieure (13) et ladite partie supérieure (15), ledit crochet (12) étant mobile en rotation par rapport à ladite structure (11) dans ladite partie latérale (14) ou ladite partie supérieure (15), un des dispositifs de blocage (21,22,23,24) comporte une seule butée (231) en appui contre une première partie choisie parmi lesdites parties latérale (14) et supérieure (15) et ladite poutre inférieure (13) en position fermée (18) dudit crochet (12) et l'autre dispositifs de blocage (21,22,23,24) comporte deux butées (241,242) respectivement en appui contre une seconde partie et une troisième partie choisie parmi lesdites parties latérale (14) et supérieure (15) et ladite poutre inférieure (13) en position fermée (18) dudit crochet (12).

12. Système d'accrochage (10) selon l'une quelconque des revendications 1 à 11,
dans lequel ledit système d'accrochage (10) comporte un dispositif de déblocage d'urgence (35) muni de deux câbles (31,32) et d'un actionneur d'urgence (30) relié auxdits deux câbles (31,32), chacun desdits deux câbles (31,32) étant relié à un dispositif de blocage (21,22,23,24) et chacun desdits deux dispositifs de blocage (21,22,23,24) étant relié à un câble (31,32).

13. Système d'accrochage (10) selon la revendication 12,
dans lequel ledit actionneur d'urgence (30) comporte au moins une commande manuelle, un moteur électrique, un vérin ou un dispositif pyrotechnique.

## Patentansprüche

1. Hakensystem (10) mit doppelter Verriegelung, umfassend eine Struktur (11), einen Haken (12), der in Bezug auf die Struktur (11) zwischen einer geschlossenen Position (18) und einer offenen Position (19) beweglich ist, und ein Blockiersystem (20) für den Haken (12) in der geschlossenen Position (18),
wobei das Blockiersystem (20) mindestens zwei Blockiervorrichtungen (21, 22, 23, 24) umfasst, wobei jede Blockiervorrichtung (21, 22, 23, 24) mindestens einen beweglichen Anschlag (211, 221, 231, 241, 242) umfasst, wobei die Anschläge (211, 221, 231, 241, 242) in Kontakt mit dem Haken (12) sind, wenn sich der Haken (12) in der geschlossenen Position (18) befindet, wobei jede Blockiervorrichtung (21, 22, 23, 24) mit Hilfe ihres mindestens einen Anschlags (211, 221, 231, 241, 242) den Haken (12) in der geschlossenen Position (18) fixiert,
**dadurch gekennzeichnet, dass** jede Blockiervorrichtung (21, 22, 23, 24) den Haken unabhängig von der anderen Blockiervorrichtung (21, 22, 23, 24) in der geschlossenen Position fixiert und jede Blockiervorrichtung (21, 22, 23, 24) einen Aktuator (215, 225, 235, 245) aufweist, der die Bewegung seines mindestens einen Anschlags (211, 221, 231, 241, 242) steuert.

2. Hakensystem (10) nach Anspruch 1,
bei dem die Anschläge (211, 221, 231, 241, 242) für jede Sperrvorrichtung (21, 22, 23, 24) auf unterschiedliche Weise mit dem Haken (12) in Kontakt sind, wenn sich der Haken (12) in der geschlossenen Position (18) befindet.

3. Hakensystem (10) nach einem der Ansprüche 1 bis 2,
bei dem der Aktuator (215, 225, 235, 245) einen Elektromotor und/oder einen Stellzylinder umfasst.

4. Hakensystem (10) nach einem der Ansprüche 1 bis 3,
bei dem mindestens eine Blockiervorrichtung (21, 22, 23, 24) mindestens einen Schwenkarm (213, 224, 233, 243, 244) umfasst, der drehbeweglich ist und den Anschlag (211, 221, 231, 241, 242) der Blockiervorrichtung (21, 22, 23, 24) umfasst, wobei der Aktuator (215, 225, 235) die Bewegung des Schwenkarms (213, 224, 233, 243, 244) steuert.

5. Hakensystem (10) nach Anspruch 4,
bei dem eine der Blockiervorrichtungen (21, 22, 23, 24) einen drehbaren Blockierschwenkarm (213) aufweist, der den Anschlag (211) umfasst, wobei der Aktuator (215) auf den Blockierschwenkarm (213) einwirkt.

6. Hakensystem (10) nach einem der Ansprüche 4 bis 5,
bei dem eine der Blockiervorrichtungen (21, 22, 23, 24) einen einzigen Anschlag (221) und zwei drehbare Schwenkarme (224, 228) aufweist, wobei die beiden Schwenkarme (224, 228) einen Kippschwenkarm (224) und einen Verriegelungsschwenkarm(228) umfassen, wobei der Kippschwenkarm (224) einen ersten Schenkel (25) und einen zweiten Schenkel (26) aufweist und der Verriegelungsschwenkarm(228) einen dritten Schenkel (27) aufweist, wobei der erste Schenkel (25) den Anschlag (221) aufweist, wobei der dritte Schenkel (27) an dem zweiten Schenkel (26) anliegt, um eine Bewegung des Kippschwenkarms (224) zu verhindern, wenn sich der Haken (12) in der geschlossenen Position (18) befindet, wobei der Aktuator (225) auf den dritten Schenkel (27) einwirkt, um den zweiten Schenkel (26) freizugeben und die Bewegung des Kippschwenkarms (224) zu ermöglichen.

7. Hakensystem (10) nach den Ansprüchen 5 und 6,
bei dem der Blockierschwenkarm (213) und der Verriegelungsschwenkarm (228) um eine gemeinsame Schwenkachse (217) beweglich sind.

8. Hakensystem (10) nach einem der Ansprüche 4 bis 7,
bei dem eine der Blockiervorrichtungen (21, 22, 23, 24) zwei Anschläge (241, 242) und zwei drehbare Schwenkarme (243, 244) aufweist, die jeweils mit den beiden Anschlägen (241, 242) versehen sind, wobei die beiden Schwenkarme (243, 244) einen Kippschwenkarm (244) und einen Verriegelungsschwenkarm(243) umfassen, wobei der Kippschwenkarm (244) einen vierten Schenkel (251) und einen fünften Schenkel (261) umfasst und der Verriegelungsschwenkarm(243) einen sechsten Schenkel (271) und einen siebten Schenkel (281) umfasst, wobei der vierte Schenkel (251) einen der beiden Anschläge (241, 242) aufweist, wobei der sechste Schenkel (271) an dem fünften Schenkel (261) anliegt, um eine Bewegung des Kippschwenkarms (244) zu verhindern, wenn sich der Haken (12) in der geschlossenen Position (18) befindet, der siebte Arm (281) den anderen der beiden Anschläge (241, 242) aufweist, und der Aktuator (245) auf den Verriegelungsschwenkarm(243) einwirkt, um den fünften Schenkel (261) freizugeben und die Bewegung des Kippschwenkarms (244) zu ermöglichen.

9. Hakensystem (10) nach einem der Ansprüche 1 bis 8,
bei dem der Haken (12) einen unteren Träger (13), einen Seitenabschnitt (14), einen oberen Abschnitt (15) und einen zwischen dem unteren Träger (13) und dem oberen Abschnitt (15) angeordneten Freiraum (16) aufweist, wobei der Haken (12) in dem Seitenabschnitt (14) oder dem oberen Abschnitt (15) in Bezug auf die Struktur (11) drehbar ist, mindestens eine der Blockiervorrichtungen (21, 22, 23, 24) einen einzelnen Anschlag (211) aufweist, der in der geschlossenen Position (18) des Hakens (12) an einem ersten Abschnitt anliegt, der unter dem Seitenabschnitt (14), dem oberen Abschnitt (15) und dem unteren Träger (13) ausgewählt ist, und eine andere der Blockiervorrichtungen (21, 22, 23, 24) einen einzelnen Anschlag (221) aufweist, der in der geschlossenen Position (18) des Hakens (12) an einem zweiten Abschnitt anliegt, der unter dem Seitenabschnitt (14), dem oberen Abschnitt (15) und dem unteren Träger (13) ausgewählt ist.

10. Hakensystem (10) nach einem der Ansprüche 1 bis 8,
bei dem mindestens eine der Blockiervorrichtungen (21, 22, 23, 24) zwei Anschläge (211, 221, 231, 241, 242) aufweist.

11. Hakensystem (10) nach Anspruch 10,
bei dem der Haken (12) einen unteren Träger (13), einen Seitenabschnitt (14), einen oberen Abschnitt (15) und einen zwischen dem unteren Träger (13) und dem oberen Abschnitt (15) angeordneten Freiraum (16) aufweist, wobei der Haken (12) in dem Seitenabschnitt (14) oder dem oberen Abschnitt (15) in Bezug auf die Struktur (11) drehbar ist, eine der Blockiervorrichtungen (21, 22, 23, 24) einen einzelnen Anschlag (231) aufweist, der in der geschlossenen Position (18) des Hakens (12) an einem ersten Abschnitt anliegt, der unter dem Seitenabschnitt (14), dem oberen Abschnitt (15) und dem unteren Träger (13) ausgewählt ist, und die andere Blockiervorrichtung (21, 22, 23, 24) zwei Anschläge (241, 242) aufweist, die jeweils in der geschlossenen Position (18) des Hakens (12) an einem zweiten Abschnitt und einem dritten Abschnitt anliegen, die unter dem Seitenabschnitt (14), dem oberen Abschnitt (15) und dem unteren Träger (13) ausgewählt sind.

12. Hakensystem (10) nach einem der Ansprüche 1 bis 11,
wobei das Hakensystem (10) eine Notlösevorrichtung (35) mit zwei Seilen (31, 32) und eine mit den beiden Seilen (31, 32) verbundene Notbetätigungsvorrichtung (30) aufweist, wobei jedes der beiden Seile (31, 32) mit einer Blockiervorrichtung (21, 22, 23, 24) verbunden ist und jede der beiden Blockiervorrichtungen (21, 22, 23, 24) mit einem Seil (31, 32) verbunden ist.

13. Hakensystem (10) nach Anspruch 12,
bei dem die Notbetätigungsvorrichtung (30) mindestens eine Handsteuerung, einen Elektromotor, einen Stellzylinder oder eine pyrotechnische Vorrichtung umfasst.

## Claims

1. Double locking hooking system (10) comprising a structure (11), a hook (12), movable in relation to the structure (11) between a closed position (18) and an open position (19), and a blocking system (20) for blocking the hook (12) in said closed position (18), said blocking system (20) comprising at least two blocking devices (21,22,23,24), each blocking device (21,22,23,24) comprising at least one movable stop (211,221,231,241,242), said stops (211,221,231,241,242) being in contact with said hook (12) when said hook (12) is in said closed position (18), each blocking device (21,22,23,24) immobilising said hook (12) in said closed position (18) by means of its at least one stop (211, 221, 231, 241, 242), **characterised in that** each blocking device (21,22,23,24) immobilises said hook in said closed position independently of the other blocking device (21,22,23,24) and each blocking device (21,22,23,24) comprises an actuator (215,225,235,245) controlling the movement of its at least one stop (211,221,231,241,242).

2. Hooking system (10) according to claim 1, wherein said stops (211,221,231,241,242) are in contact with said hook (12) separately for each blocking device (21,22,23,24) when said hook (12) is in said closed position (18).

3. Hooking system (10) according to either claim 1 or 2, wherein said actuator (215,225,235,245) comprises an electric motor and/or a jack.

4. Hooking system (10) according to any one of claims 1 to 3, wherein at least one blocking device (21,22,23,24) comprises at least one rotatable linkage (213,224,233,243,244) equipped with said stop (211,221,231,241,242) of said blocking device (21,22,23,24), said actuator (215,225,235) controlling the movement of said linkage (213,224,233,243,244).

5. Hooking system (10) according to claim 4, wherein one of said blocking devices (21,22,23,24) comprises a rotatable blocking linkage (213) comprising said stop (211), said actuator (215) acting on said blocking linkage (213).

6. Hooking system (10) according to either one of claims 4 or 5, wherein one of said blocking devices (21,22,23,24) comprises a single stop (221) and two rotatable linkages (224,228), said two linkages (224,228) comprising one swivelling linkage (224) and one locking linkage (228), said swivelling linkage (224) comprising a first arm (25) and a second arm (26) and said locking linkage (228) comprising a third arm (27), said first arm (25) comprising said stop (221), said third arm (27) abutting said second arm (26) so as to prohibit any movement of said swivelling linkage (224) when said hook (12) is in said closed position (18), said actuator (225) acting on said third arm (27) so as to release said second arm (26) and to allow said swivelling linkage (224) to move.

7. Hooking system (10) according to claims 5 and 6, wherein said blocking linkage (213) and said locking linkage (228) are movable about a same swivel axis (217).

8. Hooking system (10) according to any one of claims 4 to 7, wherein one of said blocking devices (21,22,23,24) comprises two stops (241,242) and two rotatable linkages (243,244) equipped respectively with said two stops (241,242), said two linkages (243,244) comprising a swivelling linkage (244) and a locking linkage (243), said swivelling linkage (244) comprising a fourth arm (251) and a fifth arm (261) and said locking linkage (243) comprising a sixth arm (271) and a seventh arm (281), said fourth arm (251) comprising one of said two stops (241,242), said sixth arm (271) abutting said fifth arm (261) so as to prohibit any movement of said swivelling linkage (244) when said hook (12) is in said closed position (18), said seventh arm (281) comprising the other of said two stops (241,242), said actuator (245) acting on said locking linkage (243) so as to release said fifth arm (261) and to allow said swivelling linkage (244) to move.

9. Hooking system (10) according to any one of claims 1 to 8, wherein said hook (12) comprises a lower beam (13), a lateral part (14), an upper part (15) and an open space (16) arranged between said lower beam (13) and said upper part (15), said hook (12) being rotatable with respect to said structure (11) in said lateral part (14) or said upper part (15), at least one of the blocking devices (21,22,23,24) comprises a single stop (211) abutting a first part chosen among said lateral parts (14) and upper parts (15) and said lower beam (13) with said hook (12) in said closed position (18) and another of said blocking devices (21,22,23,24) comprises a single stop (221) abutting a second part chosen among said lateral parts (14) and upper parts (15) and said lower beam (13) with said hook (12) in said closed position (18).

10. Hooking system (10) according to any one of claims 1 to 8, wherein at least one blocking device (21,22,23,24) among said blocking devices (21,22,23,24) comprises two stops (211,221,231,241,242).

11. Hooking system (10) according to claim 10, wherein said hook (12) comprises a lower beam (13), a lateral part (14), an upper part (15) and an open space (16) arranged between said lower beam (13) and said upper part (15), said hook (12) being rotatable with respect to said structure (11) in said lateral part (14) or said upper part (15), one of the blocking devices (21,22,23,24) comprises a single stop (231) abutting a first part chosen among said lateral parts (14) and upper parts (15) and said lower beam (13) with said hook (12) in said closed position (18) and the other blocking device (21,22,23,24) comprises two stops (241,242) respectively abutting a second part and a third part chosen among said lateral parts (14) and upper parts (15) and said lower beam (13) with said hook (12) in said closed position (18).

12. Hooking system (10) according to any one of claims 1 to 11, wherein said hooking system (10) comprises an emergency unblocking device (35) equipped with two cables (31,32) and an emergency actuator (30) connected to said cables (31,32), each of said two cables (31,32) being connected to a blocking device (21,22,23,24) and each of said two blocking devices (21,22,23,24) being connected to a cable (31,32).

13. Hooking system (10) according to claim 12, wherein said emergency actuator (30) comprises at least one manual control, an electric motor, a jack or a pyrotechnic device.
